## Europäisches Patentamt
## European Patent Office
## Office européen des brevets

(11) Veröffentlichungsnummer: **0 111 328**
**B1**

(12) **EUROPÄISCHE PATENTSCHRIFT**

(45) Veröffentlichungstag der Patentschrift:
23.07.86

(51) Int. Cl.⁴: **B 65 G 67/60,** B 65 G 65/20

(21) Anmeldenummer: **83112379.9**

(22) Anmeldetag: **08.12.83**

(54) **Gurt-Förderanlage für Schüttgut.**

(30) Priorität: **08.12.82 DE 3245429**

(43) Veröffentlichungstag der Anmeldung:
**20.06.84 Patentblatt 84/25**

(45) Bekanntmachung des Hinweises auf die Patenterteilung:
**23.07.86 Patentblatt 86/30**

(84) Benannte Vertragsstaaten:
**AT BE CH DE FR GB IT LI NL SE**

(56) Entgegenhaltungen:
**DE-A-1 922 636**
**DE-A-2 625 693**
**DE-B-2 143 133**
**DE-B-2 742 498**
**FR-A-1 002 068**

(73) Patentinhaber: **Conrad Scholtz AG, Am Stadtrand 55/59, D-2000 Hamburg 70 (DE)**

(72) Erfinder: **Paelke, Jürgen, An der Este 13, D-2117 Tostedt (DE)**

(74) Vertreter: **Lieck, Hans- Peter, Dipl.- Ing., Lieck & Betten Patentanwälte Maximiliansplatz 10, D-8000 München 2 (DE)**

## Beschreibung

Die Erfindung betrifft eine Gurt-Förderanlage für Schüttgut zur Entladung von großen Behältern, insbesonsere Schiffen, mit einem senkrechten Fördergerüst, das am unteren Ende ein Aufnahmegerät mit zwei Schaufelrädern aufweist, die eine gemeinsame, in etwa horizontale Drehachse haben und aufgenommenes Schüttgut auf einen am Fördergerüst nach oben laufenden Fördergurt übergeben, wobei das Aufnahmegerät durch Schwenkung um eine Vertikalachse und/oder seitliche Verlagerung des Fördergerüstes in Richtung der Schaufelrad-Drehachsen bewegbar ist.

Eine derartige Förderanlage, allerdings mit einem Kettenelevator statt eines Fördergurtes als Fördermittel, ist aus der DE-AS 27 42 498 bekannt. Zur Durchführung eines Entladevorgangs wird das heb- und senkbare Fördergerüst in den großen Behälter, z.B. das Schiff, abgesenkt, bis die beiden Schaufelräder des Aufnahmegerätes in das zu entladende Schüttgut eintauchen. Während die Schaufelräder arbeiten, werden sie durch eine entsprechende Bewegung des Aufnahmegerätes gegenüber dem oder mit samt dem Fördergerüst langsam in seitlicher Richtung, d.h. in Richtung ihrer Drehachsen bewegt, um ihnen ständig neues Schüttgut zuzuführen.

Das Aufnahmegerät der bekannten Förderanlage umfaßt zwei Schaufelräder, um eine hohe Aufnahmeleistung zu erzielen. In der Praxis hat es sich jedoch gezeigt, daß die mit den zwei Schaufelrädern angestrebte Aufnahmeleistung nicht oder nicht in vollem Maße realisiert werden kann. Dies liegt daran, daß von den beiden mit ihrem tiefsten Punkt in gleicher Höhe befindlichen Schaufelrädern das bei der seitlichen Bewegung des Aufnahmegerätes vordere Schaufelrad immer mehr Schüttgut als das in Bewegungsrichtung hintere Schaufelrad erfaßt und somit das letztere praktisch mit einem deutlich geringeren Füllungsgrad als das vordere Schaufelrad arbeitet. Dies führt außerdem zu einer nachteiligen ungleichförmigen Beschickung des Fördermittels.

Aus der DE-OS 26 25 693 ist ein Aufnahmegerät am unteren Ende eines Senkrechtförderers bekannt, welches zwei endlos umlaufende Eimerketten umfaßt. Die beiden Eimerketten sind jeweils über zwei Umlenktrommeln geführt. Von diesen sind zwei in der Höhe gegeneinander so verstellbar, daß das aufzunehmende Schüttgut in zwei Schichten unterschiedlichen Niveaus abgetragen werden kann. Wegen der Verwendung von Eimerketten und der notwendigen zugehörigen Umlenkmittel ist dieses Aufnahmegerät konstruktiv jedoch recht aufwendig.

Bei einer aus der DE-OS 19 22 636 bekannten Steilförderanlage für Schüttgut, die mit einem Fördergurt arbeitet, ist am unteren Ende des senkrechten Fördergerüstes ein seitlicher Ausleger vorgesehen, welcher von dem Fördergurt durchlaufen wird. Am freien Ende des seitlichen Auslegers ist ein Schaufelrad als Aufnahmegerät gelagert, welches das aufgenommene Schüttgut unmittelbar auf den Fördergurt im Bereich des Auslegers übergibt. Da nur ein Schaufelrad vorhanden ist, ergibt sich naturgemäß eine noch geringere Aufnahmeleistung als bei der bekannten Förderanlage mit zwei Schaufelrädern. Außerdem erfolgt die Beladung des Fördergurtes ungleichmäßig, so daß die theoretische Förderleistung des Fördergurtes nicht ausgenutzt werden kann.

Dementsprechend liegt der Erfindung die Aufgabe zugrunde, eine Gurt-Förderanlage der eingangs genannten Art mit zwei Schaufelrädern so auszugestalten, daß die beiden Schaufelräder im Regelfall mit in etwa gleichem Füllungsgrad arbeiten und das Fördermittel gleichmäßig beschicken. Diese Aufgabe ist erfindungsgemäß dadurch gelöst, daß die beiden Schaufelräder unterschiedlichen Durchmesser haben und in ihrer Drehbewegung derart gekoppelt sind, daß ihre Schaufeln das Schüttgut abwechselnd auf den Fördergurt übergeben, und daß das Aufnahmegerät beim Entladen in der Richtung bewegt wird, in der das Schaufelrad mit dem größeren Durchmesser das hintere ist.

Bei der erfindungsgemäßen Gurt-Förderanlage findet nicht nur das in Bewegungsrichtung des Aufnahmegerätes vordere Schaufelrad, sondern auch das hintere größere Schaufelrad bei der seitlichen Bewegung des Aufnahmegerätes immer Schüttgut vor. Das vordere Schaufelrad nimmt also eine Schicht Schüttgut auf, während das nacheilende, hintere Schaufelrad eine weitere, tiefer liegende Schicht Schüttgut abträgt, so daß beide Schaufelräder zwangsläufig mit etwa gleichem Füllungsgrad arbeiten und für das hintere Schaufelrad keine Gefahr des Leerlaufens besteht. Dies in Verbindung mit dem Umstand, daß die beiden Schaufelräder ihre Schaufelkammern abwechselnd auf den im Fördergerüst nach oben laufenden Fördergurt entleeren, ergibt zudem eine sehr gleichmäßige Beschickung der Förderanlage mit voller Ausnutzung der Förderkapazität des Fördergurtes.

Bei einer bevorzugten Ausgestaltung der erfindungsgemäßen Gurt-Förderanlage weist das Fördergerüst am unteren Ende einen seitlich wegstehenden, um eine Vertikalachse schwenkbaren Querausleger auf, an dem die beiden Schaufelräder jeweils auf einer Seite des Querauslegers mit zu diesem in etwa senkrechter Drehachse angeordnet sind. Hierbei ist der Querausleger entweder gegenüber dem Fördergerüst oder mit samt dem Fördergerüst um eine Vertikalachse schwenkbar, um die Bewegung der beiden Schaufelräder in Richtung ihrer Drehachse zu erzeugen. Ersichtlich sollte die Schwenkbewegung über mindestens einen Vollkreis, am besten aber, ohne Rückwärtsbewegung, kontinuierlich in einer Richtung möglich sein. Dann läßt sich das Schüttgut ganz gleichförmig mit einer schraubenartigen Bewegung des Querauslegers abtragen, bei welcher der Querausleger neben dem Schwenken entweder kontinuierlich oder auch in Stufen, z.B. nach jeder Schwenkbewegung um 360°, durch eine entsprechende vertikale Bewegung des Fördergerüstes abgesenkt wird, bis der Boden des zu entleerenden Behälters erreicht ist.

Im folgenden ist die Erfindung mit weiteren vorteilhaften Einzelheiten anhand eines schematisch dargestellten Ausführungsbeispieles näher erläutert. Es zeigen:

Figur 1 die stark vereinfachte Seitenansicht einer Gurt-Förderanlage für Schüttgut zur Entladung eines Schiffes in zwei verschiedenen Arbeitsstellungen.

Figur 2 einen senkrechten Schnitt durch den unteren Teil der Gurt-Förderanlage nach Figur 1 längs der Linie II-II in Figur 3, wobei das eine, im Schnitt an sich nicht sichtbare Schaufelrad strichpunktiert dargestellt ist,

Figur 3 einen Schnitt durch den unteren Teil der Gurt-Förderanlage nach der Linie III-III in Figur 2.

Die als Ausführungsbeispiel dargestellte Gurt-Förderanlage für Schüttgut dient zur Entladung eines Schiffes 1. Die Förderanlage umfaßt ein senkrechtes Fördergerüst 2, das unterhalb seines oberen Endes von einem zylindrischen Führungsteil 3 umschlossen und gehalten ist. Das Führungsteil 3 ist am freien Ende eines horizontalen Traggerüstes 4 um eine Vertikalachse 5 drehbar gelagert. Die Ausbildung ist so getroffen, daß sich das Fördergerüst 2 mit dem Führungsteil 3 gegenüber dem horizontalen Traggerüst 4 ohne Winkelbeschränkung drehen läßt. Das Traggerüst 4 ist in nicht näher gezeigter Weise Teil einer kaiseitigen oder bordeigenen Krananlage und kann in vertikaler Richtung angehoben oder abgesenkt werden.

An seinem unteren Ende weist das Fördergerüst 2 einen seitlich wegstehenden, kurzen horizontalen Querausleger 6 auf, der mit dem Fördergerüst 2 starr verbunden ist. In dem Querausleger 6 und an dem Fördergerüst 2 läuft ein einziger durchgehender Fördergurt 7, der in an sich bekannter Weise durch aufgesetzte, seitliche Wellenkanten und dazu quer ausgerichtete, abgewinkelte Mitnehmerleisten zu einem das Schüttgut auch senkrecht fördernden Fördermittel ausgebildet ist.

Im einzelnen ist der Fördergurt 7 von einer unteren Endtrommel 8 am freien Ende des Queraulegers 6 in etwa horizontal zum Fördergerüst 2 geführt und läuft an diesem nach konkaver Ablenkung an einem Doppel-Scheibenrad 9 nach oben zu einer oberen, mit seitlichen Scheibenrädern versehenen Abwurftrommel 10, die sich knapp unter dem oberen Ende des Fördergerüstes 2 befindet und an welcher der Fördergurt 7 abermals konkav abgelenkt wird. Von der Abwurftrommel 10 läuft der Fördergurt einer in etwa in gleicher Höhe angeordneten Antriebstrommel 11 zu und von dieser schräg nach oben zu einer oberen Endtrommel 12, die sich am oberen Ende des Fördergerüstes 2 befindet. Von der Endtrommel 12 läuft der Fördergurt senkrecht nach unten und über eine untere Umlenktrommel 13 zurück zur unteren Endtrommel B.

Oberhalb des Führungsteiles 3 ist der Gurt-Förderer von ei-nem Gehäuse 14 umschlossen, das unterhalb der Abwurftrommel 10 und der Antriebstrommel 11 einen Übergabetrichter 15 bildet. Durch diesen gelangt das über die Abwurftrommel 10 abgeworfene Schüttgut durch Schwerkraft auf einen Ringförderer 16, welcher auf der Oberseite des Traggerüstes 4 angeordnet ist und das Führungsteil 3 konzentrisch umgibt, so daß die Mündung des Übergabetrichters 15 in jeder Drehstellung des Fördergerüstes 2 mit dem Ringförderer 16 korrespondiert. Der Ringförderer 16 übergibt das Schüttgut auf einen weiterführenden Gurt-Förderer 17, der in dem horizontalen Traggerüst 4 vorgesehen ist und das Schüttgut in nicht näher gezeigter Weise abtransportiert.

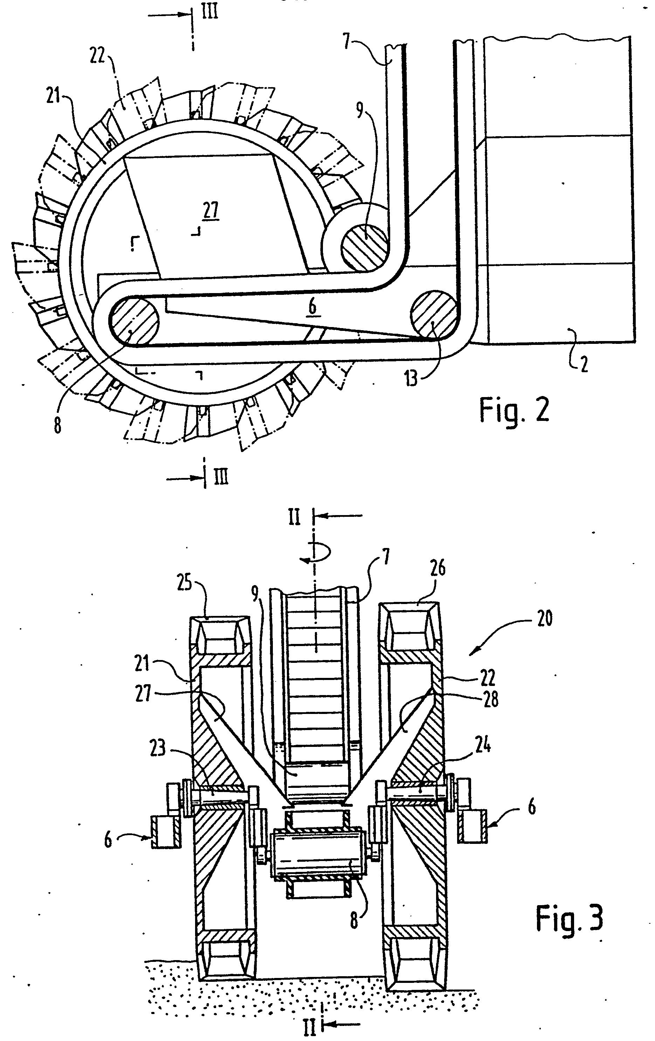

Der Querausleger 6 am unteren Ende des Fördergerüstes 2 trägt ein Aufnahmegerät 20, mit welchem das Schüttgut aus dem Schiff 1 aufgenommen und auf den Fördergurt 7 in dessen horizontalen Abschnitt zwischen unterer Endtrommel 8 und Doppelscheibenrad 9 übergeben wird. Das Aufnahmegerät, vgl. Figuren 2 und 3, besteht aus zwei Schaufelrädern 21 und 22 an sich bekannter Konstruktion, die am Querausleger 6 drehbar gelagert sind und hierbei jeweils auf einer Seite des Fördergurtes 7 so angeordnet sind, daß ihre horizontalen Drehachsen 23 und 24 miteinander fluchten und senkrecht zum Querausleger 6 ausgerichtet sind.

Die beiden Schaufelräder 21 und 22 haben einen unterschiedlichen Durchmesser, wobei das in Figur 3 linke Schaufelrad dasjenige mit dem kleineren Durchmesser ist. Typische Werte sind z.B. 7,0 m für den Durchmesser des kleineren Schaufelrades 21 und 7,5 m für den Durchmesser des größeren Schaufelrades 22. Da die Drehachsen 23 und 24 der beiden Schaufelräder auf einer gemeinsamen Linie liegen, hat die Unterschiedlichkeit ihrer Durchmesser zur Folge, daß das größere Schaufelrad 22 mit seinem tiefsten Punkt tiefer als das kleinere Schaufelrad 21 liegt, vgl. Figur 3. Beide Schaufelräder erfassen das Schüttgut mit ihren Schaufeln 25 bzw. 26 im unteren Radbereich und übergeben es vom oberen Radbereich nach innen und zur Seite entladend über je eine Schurre 27 bzw. 28 auf den Fördergurt 7.

Beide Schaufelräder 21 und 22 haben die gleiche Schaufelteilung und sind unter starrer gegenseitiger Drehkopplung in Umfangsrichtung um einen halben Schaufelwinkelabstand zueinander versetzt, vgl. Figur 2, so daß die Schaufeln 25 und 26 das Schüttgut abwechselnd auf den Fördergurt 7 übergeben und dieser somit sehr gleichmäßig beladen wird.

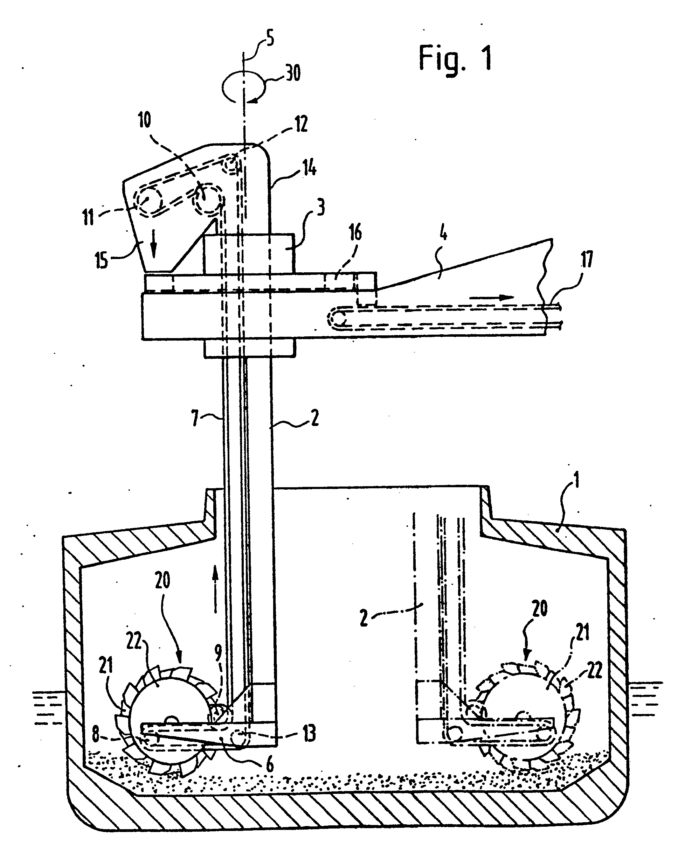

Zum Entladen eines Schiffes 1 wird das Fördergerüst 2 durch Absenken des horizontalen Traggerüstes 4 in das Innere des Schiffes abgesenkt, bis die Schaufelräder 21 und 22 in das Schüttgut eintauchen. Während des eigentlichen Entladevorgangs wird das Fördergerüst 2 mit seinem Führungsteil 3 gegenüber dem Traggerüst 4 kontinuierlich um die Vertikalachse 5 in Richtung des Pfeiles 30, von oben gesehen also im Uhrzeigersinn, gedreht. Der mit dem Fördergerüst 2 fest verbundene Querausleger 6 führt eine entsprechende Schwenkbewegung aus, bei der sich das Aufnahmegerät 20 bzw. die beiden Schaufelräder 21 und 22 zur Seite in Richtung der gemeinsamen Drehachse 23, 24 bewegen. Die Zuordnung zwischen Drehrichtung 30 und Anordnung der Schaufelräder ist dabei so getroffen, daß das größere, mit seinem tiefsten Punkt tiefer liegende Schaufelrad 22 das in Richtung der geschilderten seitlichen Bewegung hintere ist. Beide Schaufelräder erfassen Schüttgut, heben es an und übergeben es auf den Fördergurt 7. Hierbei trägt das kleinere, vordere Schaufelrad 21 eine obere Schicht Schüttgut ab, während das größere, hintere Schaufelrad nachfolgend eine weitere Schicht Schüttgut abträgt. Mit dem Fördergurt 7 wird das Schüttgut zur Abwurftrommel 10 transportiert und über diese auf den Ringförderer 16 weitergegeben, von welchem es auf den wegführenden Gurtförderer 17 gelangt. In dem Maße, wie das Schüttgut aus dem Schiff entladen wird, wird das Fördergerüst 2 allmählich weiter so abgesenkt, daß die Schaufelräder 21 und 22 immer in das Schüttgut eingetaucht bleiben. Gegebenenfalls wird die gesamte Gurt-Förderanlage durch entsprechende Bewegung des horizontalen Traggerüstes 4 auch zur Seite verlagert, damit die Schaufelräder weitere, seitliche Bereiche des Laderaumes erreichen können. Figur 1 zeigt in strichpunktierten Linien den unteren Teil des Fördergerüstes 2 mit dem Aufnahmegerät 20 in einer um 180° gedrehten und außerdem zur Seite verlagerten Stellung.

**Patentansprüche**

1. Gurt-Förderanlage für Schüttgut zur Entladung von großen Behältern, insbesondere Schiffen (1), mit einem senkrechten Fördergerüst (2), das am unteren Ende ein Aufnahmegerät (20) mit zwei Schaufelrädern (21; 22) aufweist, die eine gemeinsame, in etwa horizontale Drehachse (23, 24) haben und aufgenommenes Schüttgut auf einen am Fördergerüst (2) nach oben laufenden Fördergurt (7) übergeben, wobei das Aufnahmegerät (20) durch Schwenkung um eine Vertikalachse (5) und/oder seitliche Verlagerung des Fördergerüstes (2) in Richtung der Schaufelrad-Drehachsen (23, 24) bewegbar ist, dadurch gekennzeichnet, daß die beiden Schaufelräder (21; 22) unterschiedliche Durchmesser haben und in ihrer Drehbewegung derart gekoppelt sind, daß ihre Schaufeln (25; 26) das Schüttgut abwechselnd auf den Fördergurt (7) übergeben, und daß das Aufnahmegerät (20) beim Entladen in der Richtung bewegt wird, in der das Schaufelrad (22) mit dem größeren Durchmesser das hintere ist.

2. Gurt-Förderanlage nach Anspruch 1, dadurch gekennzeichnet, daß das Fördergerüst (2) am unteren Ende einen seitlich wegstehenden, um eine Vertikalachse (5) schwenkbaren Querausleger (6) aufweist, an dem die beiden Schaufelräder (21; 22) jeweils auf einer Seite des Querauslegers (6) mit zu diesem in etwa senkrechter Drehachse (23, 24) angeordnet sind.

3. Gurt-Förderanlage nach Anspruch 2, dadurch gekennzeichnet, daß der Querausleger (6) in einer Richtung um einen Winkel von 360° oder mehr schwenkbar ist.

**Claims**

1. Belt conveyor plant for bulk material, for unloading of large containers particularly ships (1), comprising a vertical conveyor framework (2) which at the lower extremity has a receiving device (20) comprising two bucket wheels (21; 22) which have a common approximately horizontal rotational axis (23; 24) and transfer bulk material received on to a conveyor belt (7) running upwards on the conveyor framework (2), the receiving device (20) being movable in the direction of the rotational axes (23; 24) of the bucket wheels by being pivoted around a vertical axis (5) and/or by lateral displacement of the conveyor framework (2), characterised in that the two bucket wheels (21; 22) have different diameters and are so coupled in their rotary displacement that their buckets (25; 26) alternately transfer the bulk material on to the conveyor belt (7) and that the receiving device (20) is displaced during unloading in the direction in which the bucket wheel (22) having the greater diameter is the rear one.

2. Belt conveyor plant according to claim 1, characterised in that the conveyor framework (2) is provided at the lower extremity with a laterally projecting transverse boom (6) pivotable around a vertical axis (5), on which the two bucket wheels (21; 22) are in each case situated at one side of the transverse boom (6) with the rotational axis (23; 24) approximately at right angles to the same.

3. Belt conveyor plant according to claim 2, characterised in that the transverse boom (6) may be pivoted in one direction through an angle of 360° or more.

**Revendications**

1. Transporteur à courroie pour matériaux en vrac conçu pour le déchargement de grands containers, notamment de navires (1) et comprenant un bras de bâti de transporteur (2) vertical, qui, à sa partie inférieure, comporte un dispositif de reprise (20) comprenant deux roues à godets (21, 22) qui ont un axe de rotation commun (23,24) à peu pres horizontal et déversent le matériau en vrac qu'elles ont repris sur une courroie transporteuse (7) qui, en suivant le bras de transporteur (2) se dirige vers le haut, le dispositif de reprise (20) pouvant se déplacer par pivotement autour d'un axe vertical (5) et/ou par déplacement latéral du bras de transporteur (2) dans le sens des axes de rotation (23, 24) des roues à godets,

caractérisé en ce que les deux roues à godets (21, 22) ont des diamètres différents et, dans leur mouvement de rotation, sont accouplées de telle manière que leurs godets (25, 26) déversent alternativement le matériau en vrac sur la courroie transporteuse (7) et en ce que, lors du déchargement, le dispositif de reprise (20) se déplace dans le sens dans lequel la roue à godets (22) qui a le plus grand diamètre est celle qui se trouve en arrière.

2. Transporteur à courroie selon la revendication 1,

caractérisé en ce que le bras de transporteur (2) comporte, à sa partie inférieure, un avant-bras transversal (6) qui s'étend latéralement en porte-à-faux et peut tourner autour d'un axe vertical (5) et sur lequel les deux roues à godets (21, 22) sont montées, chacune d'un côté de l'avant-bras transversal (6) de manière que leur axe de rotation (23, 24) soit à peu près perpendiculaire à cet avant-bras.

3. Transporteur à courroie selon la revendication 2,

caractérisé en ce que l'avant-bras transversal (6) peut pivoter dans un sens, d'un angle de 360° ou davantage.

Fig. 1

Fig. 2

Fig. 3